# EUROPÄISCHE PATENTSCHRIFT

(11) **EP 3 999 399 B1**
(45) Veröffentlichungstag und Bekanntmachung des Hinweises auf die Patenterteilung: **01.07.2026**
(21) Anmeldenummer: 20743994.4
(22) Anmeldetag: 16.07.2020
(51) Int. Cl.: B62B 9/00

(54) **KINDERWAGENGESTELL, KINDERWAGEN UND COMPUTERLESBARES SPEICHERMEDIUM**
STROLLER FRAME, STROLLER AND COMPUTER-READABLE STORAGE MEDIUM
CHÂSSIS DE POUSSETTE, POUSSETTE ET SUPPORT DE MÉMOIRE LISIBLE PAR ORDINATEUR

(30) Priorität: 16.07.2019 DE 202019103919 U
(43) Veröffentlichungstag der Anmeldung: 25.05.2022
(73) Patentinhaber: CYBEX GmbH, 95448 Bayreuth (DE)
(72) Erfinder: SPOUR, Jiri, 25241 Zlatniky-Hodkovice (CZ)
(74) Vertreter: Meissner Bolte Partnerschaft mbB
(86) Internationale Anmeldenummer: PCT/EP2020/070090
(87) Internationale Veröffentlichungsnummer: WO 2021/009270

(56) Entgegenhaltungen:
- EP-A1- 2 808 000
- WO-A1-2018/210684
- DE-A1- 19 755 309
- DE-U1- 202017 104 166
- US-A1- 2008 047 764
- US-A1- 2017 001 656
- US-A1- 2017 129 523

## Beschreibung

Die Erfindung betrifft ein Kinderwagengestell, einen Kinderwagen und ein computerlesbares Speichermedium.

Motorisierte Kinderwägen sind grundsätzlich bekannt. Diese können so konfiguriert sein, dass sie ausschließlich durch Motorkraft bewegt werden können. Weiterhin ist es grundsätzlich bekannt, Kinderwägen mit Motorunterstützung auszustatten, die die Antriebskraft einer den Kinderwagen bedienenden Person unterstützt, jedoch keine Unterstützung leistet, wenn durch den Bedienenden keine Kraft ausgeübt wird.

Darüber hinaus ist es notwendig, den Kinderwagen zu bremsen, wenn der Bedienende keine Hand am Kinderwagen hat. Somit kann ein versehentliches Wegrollen oder unkontrolliertes Weiterfahren des Kinderwagens verhindert werden.

Zur Erkennung, ob die bedienende Person eine Hand an dem Kinderwagen hat, gibt es im Stand der Technik eine Reihe von Lösungen. So ist z.B. aus der EP 2 805 867 B1 bekannt, den Schiebegriff eines Kinderwagens mit kapazitiven Sensoren auszustatten, die eine Hand detektieren.

Bei der Lösung der EP 2 805 867 B1 besteht jedoch der Nachteil, dass eine bedienende Person, die Handschuhe trägt, nicht effektiv erkannt wird.

Es ist ferner aus der DE 299 01 834 U1 bekannt, einen mechanischen Schalter an dem Griff eines Kinderwagens anzubringen, um festzustellen, ob die bedienende Person den Kinderwagen schiebt. Diese Lösung hat jedoch den Nachteil, dass an dem Griff eines Kinderwagens angebrachte Gegenstände, wie z.B. Jacken, zu einer Auslösung des Schalters führen können, so dass eine sichere Bedienung des Kinderwagens nicht gewährleistet ist.

Es ist daher Aufgabe der Erfindung, die Sicherheit von Kinderwagengestellen und insbesondere von Kinderwägen zu verbessern. Es ist weiter insbesondere Aufgabe der Erfindung, die Erkennung, ob eine bedienende Person ein Kinderwagengestell oder einen Kinderwagen anfasst, zu verbessern. Es ist weiter insbesondere Aufgabe der Erfindung, Fehlerkennungen von einem Kontakt von bedienenden Personen und einem Kinderwagengestell bzw. einem Kinderwagen zu reduzieren.

Die Aufgabe wird gelöst durch ein Kinderwagengestell nach Anspruch 1, einen Kinderwagen nach Anspruch 17 und ein computerlesbares Speichermedium nach Anspruch 18.

Insbesondere wird die Aufgabe gelöst durch ein Kinderwagengestell, umfassend:
- eine Sensoreinheit zur Erfassung von Sensordaten;
- eine Antriebseinheit,
wobei eine Recheneinheit vorgesehen ist, die dazu ausgebildet ist, in Abhängigkeit eines zeitlichen Verlaufs der Sensordaten zwischen einem Antriebszustand und einem Nichtantriebszustand umzuschalten. Insbesondere ist die Antriebseinheit dazu ausgebildet (von einem Antriebszustand) in einen Nichtantriebszustand zu schalten und/oder dazu ausgebildet (von einem/dem Nichtantriebszustand) in einen Antriebzustand zu schalten.

Ein Kern der Erfindung ist, dass zur Bestimmung, ob ein Nichtantriebszustand oder Antriebszustand eingenommen werden soll, ein zeitlicher Verlauf von Sensordaten betrachtet wird. Somit ist es in diesem Zusammenhang nicht vorgesehen, nur einen einzelnen Zeitpunkt bzw. ein einzelnes Sensorsignal für die Umschaltung in den Nichtantriebszustand bzw. Antriebszustand heranzuziehen. Durch die Berücksichtigung eines zeitlichen Verlaufs kann ermittelt werden, ob ein im wesentlichen statisches Signal oder ein sich dynamisch änderndes Signal durch die Sensoreinheit erfasst wird. Ein statisches Signal kann indizieren, dass keine Person das Kinderwagengestell schiebt. Ein sich dynamisch änderndes Signal kann dagegen indizieren, dass eine Person das Kinderwagengestell anschiebt. Der Nichtantriebszustand kann in einer Ausführungsform als ein Bremszustand ausgebildet sein. Ein Bremszustand kann dadurch charakterisiert sein, dass das Kinderwagengestell aktiv verlangsamt bzw. zum Stehen gebracht wird. Der Nichtantriebszustand kann auch den Fall umfassen, in dem auf ein aktives Antreiben des Kinderwagengestells verzichtet wird, z.B. ein Leerlauf.

Bei der Sensoreinheit kann es sich beispielsweise um einen Kraftsensor oder um einen Drehmomentsensor handeln. Die Sensoreinheit kann dazu ausgebildet sein, die Sensordaten mit einer Abtastfrequenz ≥ 5 Hz oder ≥10 Hz oder ≥ 15 Hz und/oder ≤ 200 Hz oder ≤ 100 Hz zu erfassen.

Gemäß der Erfindung ist die Recheneinheit dazu ausgebildet, mindestens einen Referenzwert für die Sensordaten, insbesondere für mindestens eine zeitlich zusammenhängende Teilmenge der Sensordaten, zu bestimmen.

Die Teilmenge der Sensordaten kann die Sensordaten einer bestimmten Zeitspanne umfassen, beispielsweise kann es sich bei der zeitlich zusammenhängenden Teilmenge der Sensordaten um einen 0,5-Sekundenabschnitt der Sensordaten handeln. Ferner ist es denkbar, dass die Zeitspanne < 0,2 Sekunden, < 0,5 Sekunden, ≤ 0,8 Sekunden, ≤ 1 Sekunde, ≤ 2 Sekunden und/oder ≤ 5 Sekunden beträgt.

In einer Ausführungsform können zeitlich direkt aufeinanderfolgende Teilmengen in Bezug auf darin erfasste Messwerte überlappend sein. So können mindestens ein Messwert und höchstens alle bis auf einen Messwert in beiden Teilmengen erfasst sein. In einer Ausführungsform ist zusätzlich oder alternativ vorgesehen, dass zeitlich direkt aufeinanderfolgende Teilmengen in Bezug auf darin erfasste Messwerte nicht überlappend sind. So kann keiner der in einer der Teilmengen enthaltenen Messwerte auch in der anderen Teilmenge erfasst sein. Insbesondere können nicht überlappende, zeitlich direkt aufeinanderfolgende Teilmengen derart ausgebildet sein, dass auf den letzten in der früheren Teilmenge erfassten Messwert direkt der erste in der späteren Teilmenge erfasste Messwert folgt.

Das Bilden eines Referenzwerts hat den Vorteil, dass die Recheneinheit das Umschalten in Abhängigkeit des zeitlichen Verlaufs der Sensordaten und des Referenzwerts ausführen kann. Es wird also eine Bezugsgröße für eine Teilmenge der Sensordaten bestimmt, mit der ein oder mehrere aktuelle Messwerte verglichen werden können. Dadurch wird die Berechnung vereinfacht.

In einer Ausführungsform kann der Referenzwert einen Mittelwert, beispielsweise ein getrimmtes Mittel, ein harmonisches Mittel oder ein gewichtetes harmonisches Mittel angeben.

Der Referenzwert kann daher eine (Art) Zusammenfassung der einzelnen Sensorwerte der zusammenhängenden Teilmenge der Sensordaten angeben. Dadurch können einzelne Sensordaten in Relation zu dem Referenzwert gesetzt werden, wodurch ein effizientes Schalten in den Nichtantriebszustand bzw. Antriebszustand möglich ist. Gemäss der Erfindung, geben die Sensordaten eine Vielzahl von Messwerten an, denen jeweils ein Aufnahmezeitpunkt zugeordnet ist.

Zur effizienten Speicherung der Sensordaten, kann den Messwerten jeweils ein Aufnahmezeitpunkt zugeordnet sein. Dadurch ist es nicht notwendig, die Messwerte in einer bestimmten Reihenfolge in einer Datenstruktur zu speichern. Es ist daher ferner möglich, die Messwerte in einer beliebigen Datenstruktur zu speichern, da die zeitliche Reihenfolge durch die Zeitpunkte wiederhergestellt werden kann.

Zur Speicherung ist aber auch die Verwendung einer Datenstruktur möglich, die eine feste Größe aufweisen kann und z.B. dazu ausgebildet sein kann mindestens oder genau die in einer Teilmenge enthaltene Anzahl von Messwerten zu speichern. Die Datenstruktur kann nach dem FIFO (first in - first out) Prinzip arbeiten, so dass mit jeder Speicherung eines neuen Messwertes der älteste Messwert gelöscht wird.

Gemäß der Erfindung bildet die Anzahl der zeitlich aufeinanderfolgenden Messwerte eine bzw. die zeitlich zusammenhängende Teilmenge der Sensordaten.

In einer Ausführungsform kann ein Messwert eine Kraft und/oder ein Drehmoment angeben.

Es ist (also) möglich, dass es sich bei den Sensoreinheiten um Kraft- oder Drehmomentsensoren handelt. Eine Sensoreinheit kann entsprechend zur Abgabe von Kraft- bzw. Drehmomentwerten ausgebildet sein. Insbesondere ist es möglich, dass eine Vielzahl von Sensoreinheiten vorgesehen ist, wobei zumindest ein Kraftsensor und/oder ein Drehmomentsensor vorgesehen ist bzw. sind, wobei die Recheneinheit dazu ausgebildet sein kann, in Abhängigkeit eines zeitlichen Verlaufs der Sensordaten des Kraftsensors bzw. des Drehmomentsensors die Antriebseinheit in einen entsprechenden Zustand (Nichtantriebszustand bzw. Antriebszustand) zu schalten.

Gemäß der Erfindung ist die Recheneinheit dazu ausgebildet, die Antriebseinheit in den Nichtantriebszustand zu schalten, wenn nicht mindestens eine erste vorbestimmte Anzahl von Messwerten außerhalb, insbesondere wenn alle Messwerte der Teilmenge innerhalb eines Toleranzintervalls um den Referenzwert liegen und/oder die Antriebseinheit in einen Antriebszustand zu schalten, wenn mindestens eine erste vorbestimmte Anzahl von Messwerten, insbesondere mindestens einer der Messwerte der Teilmenge außerhalb des Toleranzintervalls liegt.

Gemäß der Erfindung ist die Recheneinheit dazu ausgebildet, die Antriebseinheit in den Nichtantriebszustand zu schalten, wenn ein statistisches Maß der Streuung der Messwerte innerhalb eines Toleranzintervalls um den Referenzwert liegt und/oder die Antriebseinheit in einen Antriebszustand zu schalten, wenn ein statistisches Maß der Streuung der Messwerte außerhalb des Toleranzintervalls liegt.

In einer Ausführungsform kann die Recheneinheit dazu ausgebildet sein, das Schalten in den Nichtantriebszustand unter Berücksichtigung mehrerer, z.B. zwei, drei, fünf oder zehn, aufeinanderfolgender Teilmengen auszuführen, wobei insbesondere das Schalten ausgeführt werden kann, wenn die Messwerte von mindestens einer oder von mindestens zweier oder von allen berücksichtigten Teilmengen eine der vorgenannten Bedingungen erfüllen.

Ein Toleranzintervall gibt also ein (bzw. eine Art) Fenster an, außerhalb dessen sich weniger als eine erste vorbestimmte Anzahl von Messwerten befinden darf, insbesondere in dem sich alle Messwerte in der betrachteten Zeitspanne befinden müssen, damit das Signal der Sensoreinheit als im Wesentlichen statisch angesehen werden kann. Sofern mindestens eine erste vorbestimmte Anzahl von Messwerten, insbesondere mindestens ein Wert außerhalb dieses Toleranzintervalls liegt, kann davon ausgegangen werden, dass eine sich dynamisch ändernde Kraft auf die Sensoreinheit wirkt, d.h. ein im Wesentlichen dynamisches Signal vorliegt. Das Berühren der Sensoreinheit durch einen Benutzer an dem Kinderwagengestell führt zu einer hohen Variabilität der aufgezeichneten Kräfte. Somit kann, wenn eine hohe Streuung (z.B. Varianz oder ein anderes statistisches Maß der Streuung) festgestellt wird, davon ausgegangen werden, dass eine menschliche Person mit dem Kinderwagengestell interagiert. Bei einer im Wesentlichen konstanten Kraft kann es sich beispielsweise um einen Gegenstand handeln, der auf den Sensor wirkt. Beispielsweise könnte es sich um eine Jacke handeln, die an dem Kinderwagengestell aufgehängt ist.

Gemäß der Erfindung ist die Recheneinheit dazu ausgebildet, die Antriebseinheit in einen Antriebszustand zu schalten, wenn mindestens eine erste vorbestimmte Anzahl von Messwerten, insbesondere mindestens einer der Messwerte der Teilmenge außerhalb des Toleranzintervalls liegt.

In einer Ausführungsform ist die Recheneinheit dazu ausgebildet, in dem Antriebszustand einen Antrieb des Kinderwagengestells durch die Antriebseinheit zuzulassen. Somit ist es nicht zwangsläufig so, dass bei einem Schalten in den Antriebszustand der Antrieb auch tatsächlich aktiv ist. Vielmehr kann die tatsächliche Aktivierung von weiteren Parametern wie z.B. einem Betrag der durchschnittlichen Schiebekraft, einem Drehen von mindestens einem Rad oder dergleichen abhängig sein. Ferner kann der Antriebszustand indizieren, dass ein Benutzer des Kinderwagengestells die Antriebsvorrichtung aktivieren kann.

In einer Ausführungsform kann vorgesehen sein, dass die Recheneinheit dazu ausgebildet ist, die Antriebseinheit beim Schalten in den Antriebszustand direkt oder auch indirekt zu aktivieren und/oder mit Strom zu versorgen. Das Aktivieren der Antriebseinheit kann in der Ausführungsform ein Antreiben des Kinderwagengestells umfassen.

Gemäss der Erfindung ist die Recheneinheit dazu ausgebildet, die Antriebseinheit in den Antriebszustand zu schalten, wenn ein statistisches Maß der Streuung der Messwerte außerhalb des Toleranzintervalls um den Referenzwert liegt.

In einer Ausführungsform kann die Recheneinheit dazu ausgebildet sein, das Schalten in den Antriebszustand unter Berücksichtigung mehrerer, z.B. zwei, drei, fünf oder zehn, aufeinanderfolgender Teilmengen zu auszuführen, wobei insbesondere das Schalten in den Antriebszustand ausgeführt werden kann, wenn die Messwerte von mindestens einer oder mindestens zweier oder aller der betrachteten Teilmengen eine der vorgenannten Bedingungen erfüllen.

Es ist auch möglich, dass beim Feststellen, dass eine menschliche Person mit dem Kinderwagengestell interagiert, die Antriebseinheit das Kinderwagengestell antreibt. Das bedeutet, dass die Antriebseinheit entweder unterstützend oder vollständig das Kinderwagengestell bewegt.

Bei dem Toleranzintervall kann es sich um ein Kraftintervall handeln, wobei es sich als vorteilhaft herausgestellt hat, wenn ein Toleranzintervall von höchstens ± 30 Newton, höchstens ±40 Newton oder höchstens ±100 Newton um den Referenzwert betrachtet wird.

In einer Ausführungsform ist es weiterhin möglich, dass das Toleranzintervall in Abhängigkeit des Referenzwerts gewählt ist. Zum Beispiel ist es möglich, dass das Toleranzintervall höchstens ± 5 % des Referenzwerts beträgt. In anderen Ausführungsformen ist es möglich, dass das Toleranzintervall höchstens ± 10 % des Referenzwerts, höchstens ± 20 % des Referenzwerts oder höchstens ± 50 % des Referenzwerts beträgt.

Eine, insbesondere die obige, zeitlich zusammenhängende, Teilmenge der Sensordaten kann mindestens ein Intervall umfassen, wobei jedes Intervall mindestens zwei Messwerte umfasst, wobei mindestens einer der mindestens zwei Messwerte, insbesondere alle Messwerte bis auf einen, in einem bestromten Zustand der Antriebseinheit aufgezeichnet wird, und wobei mindestens einer der mindestens zwei Messwerte, insbesondere genau ein Messwert, in einem nicht bestromten Zustand der Antriebseinheit aufgezeichnet wird, wobei die Recheneinheit dazu ausgebildet ist, die Antriebseinheit in den Nichtantriebszustand zu schalten, wenn nicht mindestens eine erste vorbestimmte Anzahl von im unbestromten Zustand der Antriebseinheit aufgezeichneten Messwerten der Teilmenge außerhalb, insbesondere wenn alle im unbestromten Zustand der Antriebseinheit aufgezeichneten Messwerte der Teilmenge innerhalb eines Toleranzintervalls um den Referenzwert liegen und/oder die Antriebseinheit in einen Antriebszustand zu schalten, wenn mindestens eine erste vorbestimmte Anzahl, insbesondere mindestens einer der im unbestromten Zustand der Antriebseinheit aufgezeichneten Messwerte der Teilmenge außerhalb des Toleranzintervalls liegt.

Eine, insbesondere die obige, zeitlich zusammenhängende, Teilmenge der Sensordaten kann mindestens ein Intervall umfassen, wobei jedes Intervall mindestens zwei Messwerte umfasst, wobei mindestens einer der mindestens zwei Messwerte, insbesondere alle Messwerte bis auf einen, in einem bestromten Zustand der Antriebseinheit aufgezeichnet wird, und wobei mindestens einer der mindestens zwei Messwerte, insbesondere genau ein Messwert, in einem nicht bestromten Zustand der Antriebseinheit aufgezeichnet wird, wobei die Recheneinheit dazu ausgebildet ist, die Antriebseinheit in den Nichtantriebszustand zu schalten, wenn ein statistisches Maß der Streuung der im unbestromten Zustand der Antriebseinheit aufgezeichneten Messwerte der Teilmenge innerhalb eines Toleranzintervalls um den Referenzwert liegen und/oder die Antriebseinheit in einen Antriebszustand zu schalten, wenn ein statistisches Maß der Streuung der im unbestromten Zustand der Antriebseinheit aufgezeichneten Messwerte der Teilmenge außerhalb des Toleranzintervalls liegt. In einer Ausführungsform kann das Kinderwagengestell einen Schieberabschnitt umfassen, der dazu ausgebildet sein kann, durch einen Verwender zum Schieben des Kinderwagengestells verwendet zu werden. Dabei kann in einer Ausführungsform die Sensoreinheit an dem Schieberabschnitt derart angeordnet sein, um mit der Hand eines Verwenders zu kontaktieren, wenn dieser eine Hand an dem Schieberabschnitt hat.

Die Anordnung der Sensoreinheit kann daher derart erfolgen, dass diese direkt mit der Hand eines Verwenders kontaktieren kann. Damit ist eine sichere Erfassung der Interaktion des Verwenders mit dem Kinderwagengestell gegeben.

In einer weiteren Ausführungsform kann die Sensoreinheit an einem Verbindungsabschnitt der Schiebereinheit mit einem Rahmen des Kinderwagengestells angeordnet sein. Dabei kann die Sensoreinheit dazu ausgebildet sein, eine Kraft zu messen, die von dem Schieberabschnitt auf den Rahmen wirkt.

Mit der vorstehend beschriebenen Ausführungsform ist es möglich, eine direkte Interaktion der Sensoreinheit mit dem Verwender zu verhindern, so dass Beschädigungen durch Fehlbedienung vorgebeugt werden kann.

Die Antriebseinheit kann auf unterschiedliche Art und Weise ausgestaltet sein. Beispielsweise kann die Antriebseinheit einen Elektromotor und eine Bremse umfassen, wobei beim Schalten der Antriebseinheit in den Nichtantriebszustand die Bremseinheit bzw. die Bremse durch die Recheneinheit geschaltet wird. In einer weiteren Ausführungsform ist es jedoch auch denkbar, dass, wenn die Antriebseinheit einen Elektromotor umfasst, der Elektromotor als Generator geschaltet wird und/oder als Bremse, insbesondere als eine Rekuperationsbremse, eingesetzt wird, wobei die Rekuperationsbremse dazu ausgebildet ist, elektrische Energie an einen Akkumulator abzugeben. Dies hat den Vorteil, dass zusätzlich zu dem Motor ggf. keine weitere Bremse bzw. kein weiterer Bremsvorgang notwendig ist.

In einer Ausführungsform kann das Kinderwagengestell mindestens drei Räder umfassen, wobei die Antriebseinheit derart angeordnet und ausgebildet sein kann, mindestens eines der Räder anzutreiben und/oder zu blockieren.

Das Kinderwagengestell kann unterschiedlich ausgestaltet sein. Dabei können Dreirad-, aber auch Vierrad-Konfigurationen vorgesehen sein. Somit wird eine sehr vielseitige Lösung bereitgestellt.

In einer Ausführungsform kann das Kinderwagengestell einen Rahmen umfassen, an dem der Schieberabschnitt und/oder mindestens drei Räder angeordnet sein können.

Der Schieberabschnitt und die Räder können an einem Rahmen befestigt sein, der dem Kinderwagengestell Stabilität verleiht.

In einer Ausführungsform kann der Schieberabschnitt mit dem Rahmen über ein Verbindungselement und/oder einen Verbindungsabschnitt verbindbar ausgebildet sein, wobei die Sensoreinheit an dem Verbindungselement oder dem Verbindungsabschnitt angeordnet sein kann.

Es ist daher möglich, das Interagieren eines Benutzers mit dem Schieberabschnitt indirekt über eine Kraft zwischen Schieberabschnitt und Rahmen zu detektieren.

In einer Ausführungsform kann der Rahmen mindestens einen Gelenkabschnitt umfassen, wobei der Schieberabschnitt um den Gelenkabschnitt herum rotierbar ausgebildet sein kann.

Um das Kinderwagengestell zusammenzuklappen und so ein kompaktes Tragemaß zu erhalten, kann der Schieberabschnitt einklappbar ausgebildet ein. Dazu kann der Schieberabschnitt um den Gelenkabschnitt herum rotiert werden.

In einer Ausführungsform kann die Sensoreinheit in dem Gelenkabschnitt angeordnet sein.

Es ist also denkbar, dass eine Interaktion eines Benutzers mit dem Kinderwagengestell indirekt über ein Drehmoment, welches in dem Gelenkabschnitt gemessen wird, detektiert werden kann. Damit wird eine weitere Möglichkeit gegeben, wie die Interaktion festgestellt werden kann. Die Anordnung der Sensoreinheit in dem Gelenkabschnitt hat den Vorteil, dass dadurch ein kompaktes Baumaß und eine sichere und vor äußeren Einflüssen geschützte Anordnung gewählt werden kann. Darüber hinaus ist damit eine aufwändige Verkabelung des Schieberabschnitts unnötig.

In einer Ausführungsform kann der Rahmen von einer ausgeklappten in eine eingeklappte Konfiguration klappbar ausgebildet sein, insbesondere unter Verwendung des Gelenkabschnittes.

In einer Ausführungsform kann in einer/der ausgeklappten Konfiguration des Rahmens, die Sensoreinheit kommunikativ und/oder elektrisch mit der Antriebseinheit und/oder der Recheneinheit verbunden sein und/oder in einer/der eingeklappten Konfiguration des Rahmens kann die Sensoreinheit nicht kommunikativ und/oder elektrisch mit der Antriebseinheit und/oder Recheneinheit verbunden sein.

Die ausgeklappte Konfiguration kann in einer Ausführungsform als eine vollständig ausgeklappte Konfiguration oder eine teilweise ausgeklappte Konfiguration sein. Die eingeklappte Konfiguration kann in einer Ausführungsform als eine vollständig eingeklappte Konfiguration oder eine teilweise eingeklappte Konfiguration sein.

Die Antriebseinrichtung kann durch ein Einklappen des Kinderwagengestells bzw. des Rahmens auf einfache Art und Weise deaktiviert werden.

Die Aufgabe wird ferner gelöst durch einen Kinderwagen umfassend ein Kinderwagengestell, wie es vorstehend beschrieben ist.

Es ergeben sich ähnliche oder identische Vorteile, wie sie im Zusammenhang mit dem Kinderwagengestell beschrieben worden sind.

Die Aufgabe wird ferner insbesondere gelöst durch ein computerlesbares Speichermedium, welches Instruktionen enthält, die mindestens einen Prozessor dazu veranlassen, die folgenden Schritte zu implementieren, wenn die Instruktionen durch einen Prozessor ausgeführt werden:
- Bereitstellen und/oder Empfangen von Sensordaten;
- Bestimmen eines Referenzwertes für die Sensordaten;
- Bereitstellen und/oder Empfangen (mindestens) eines Messwertes;
- Bestimmen eines Steuerbefehls für eine Antriebseinheit, insbesondere für eine Antriebseinheit eines Kinderwagens bzw. eines Kinderwagengestells, insbesondere wie es vorstehend beschrieben wurde, unter Verwendung der Sensordaten und des Referenzwertes.

Die Aufgabe wird ebenfalls insbesondere gelöst durch ein Verfahren zum Bestimmen eines Steuerbefehls, umfassend die folgenden Schritte:
- Bereitstellen und/oder Empfangen von Sensordaten;
- Bestimmen eines Referenzwertes für die Sensordaten;
- Bereitstellen und/oder Empfangen (mindestens) eines Messwertes;
- Bestimmen eines Steuerbefehls für eine Antriebseinheit, insbesondere für eine Antriebseinheit eines Kinderwagens und/oder eines Kinderwagengestells, wie es vorstehend beschrieben wurde, unter Verwendung der Sensordaten und des Referenzwertes.

In einer Ausführungsform kann der Steuerbefehl als ein Befehl zur Schaltung in den Nichtantriebszustand und/oder Bremszustand ausgebildet sein, wenn nicht mindestens eine erste vorbestimmte Anzahl von Messwerten außerhalb, insbesondere wenn alle Messwerte einer Teilmenge innerhalb eines Toleranzintervalls um den Referenzwert liegt/liegen und/oder wenn ein statistisches Maß der Streuung der Messwerte einer Teilmenge innerhalb eines Toleranzintervalls um den Referenzwert liegt.

In einer Ausführungsform kann der Steuerbefehl als ein Antriebsbefehl ausgebildet sein, wenn mindestens eine erste vorbestimmte Anzahl von Messwerten, insbesondere mindestens ein Messwert einer Teilmenge und/oder ein statistisches Maß der Streuung der Messwerte einer Teilmenge außerhalb eines Toleranzintervalls um den Referenzwert liegt/liegen.

Es ergeben sich ähnliche oder identische Vorteile, wie sie bereits im Zusammenhang mit dem Kinderwagengestell beschrieben worden sind.

Die Aufgabe wird weiter insbesondere gelöst durch ein computerlesbares Speichermedium, welches Instruktionen enthält, die mindestens einen Prozessor dazu veranlassen, ein Verfahren wie es vorstehend beschrieben wurde zu implementieren, wenn die Instruktionen durch den mindestens einen Prozessor ausgeführt werden.

Es ergeben sich ähnliche oder identische Vorteile, wie sie bereits im Zusammenhang mit dem Verfahren beschrieben worden sind.

Weitere Ausführungsformen ergeben sich aus den Unteransprüchen.

Im Folgenden wird die Erfindung anhand von Ausführungsbeispielen näher erläutert. Dabei zeigt
- Fig. 1: eine schematische Darstellung eines Kinderwagengestells;
- Fig. 2: eine schematische Darstellung unterschiedlicher Anordnungsmöglichkeiten von Sensoreinheiten;
- Fig. 3: einen Graphen, der beispielhafte Sensordaten zeigt;
- Fig. 4: einen weiteren Graphen, der Sensordaten in einem weiteren Ausführungsbeispiel zeigt; und
- Fig. 5: ein Flussdiagramm für ein Verfahren zum Bestimmen eines Steuerbefehls.

Im Folgenden werden für gleiche bzw. gleichwirkende Teile dieselben Bezugsziffern verwendet.

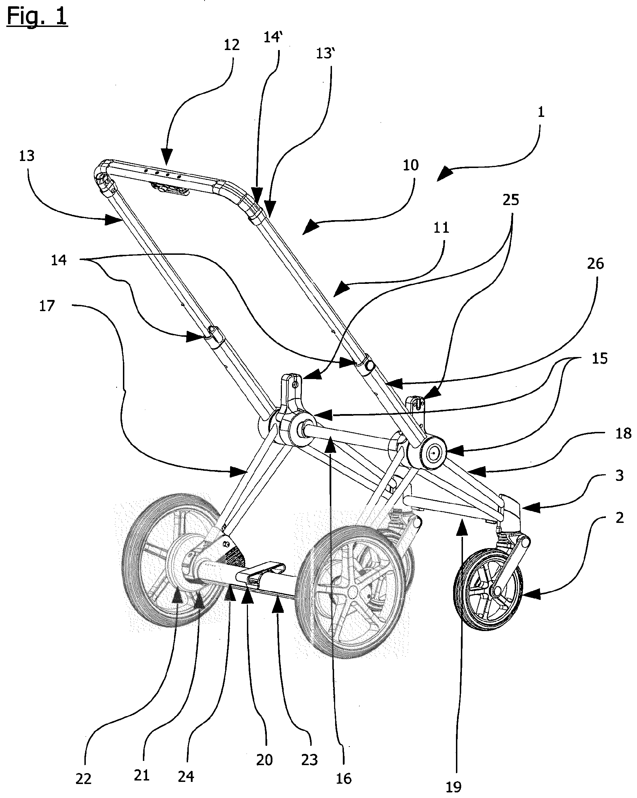

Fig. 1 zeigt einen Kinderwagen 1, der vier Räder 2 aufweist. Zwei Vorderräder 2 sind jeweils über Radbefestigungen 3 mit einer Vorderradaufhängung 18 mit dem Kinderwagen 1 verbunden. Im vorderen Bereich des Kinderwagens 1 ist zwischen den Radbefestigungen 3 eine Vorderradstrebe 19 angeordnet, um die Räder 2 am Kinderwagen 1 zu stabilisieren.

Die Radbefestigungen 3 der Vorderräder 2 sind über eine Vorderradaufhängung 18 mit einer Verstelleinrichtung 15 verbunden. Die Verstelleinrichtung 15 ist nach hinten versetzt oberhalb der Vorderräder 2 angeordnet. An der Verstelleinrichtung 15 ist ebenfalls eine Hinterradaufhängung 17 angeordnet, an der an einer Hinterradachse 24 zwei Hinterräder angeordnet sind. Etwa mittig an der Hinterradachse ist eine Feststellbremse 20 angeordnet, die durch einen Fuß betätigbar ausgebildet ist. Die Feststellbremse 20 ist dazu ausgebildet, die Hinterräder festzustellen. Diese können dann nur durch das Lösen der Feststellbremse 20 wieder in Bewegung gebracht werden.

An den Enden der Hinterradachse 24 sind in dem gezeigten Ausführungsbeispiel zwei Elektromotoren 21 zum Antreiben der Hinterräder angeordnet. In weiteren Ausführungsbeispielen ist es jedoch auch denkbar, dass ein einziger Motor beide Räder über eine Welle und/oder ein Getriebe antreibt.

In dem gezeigten Ausführungsbeispiel der Fig. 1 ist die Hinterradachse 24 als Hohlzylinder ausgebildet, wobei in der Hinterradachse 24 ein Akkumulator 23 angeordnet ist, der elektrisch mit den Elektromotoren 21 verbunden ist. Alternativ kann die Hinterradachse 24 auch als Strebe und der Akkumulator 23, auch teilweise, darunterliegend ausgebildet sein. Darüber hinaus kann in oder an der Hinterradachse 24 eine Steuerelektronik angeordnet sein, die dazu ausgebildet ist, die Funktionen der Motoren 21 zu steuern.

An der Verstelleinrichtung 15 sind ferner Halteeinrichtungen 25 angeordnet, die dazu ausgebildet sind, eine Aufnahmeeinrichtung (z.B. eine Sitzschale, eine Sitzeinheit oder eine Liegewanne) aufzunehmen.

Die Verstelleinrichtungen 15 sind über eine Querstrebe 16 miteinander verbunden, um die Stabilität der Gesamtvorrichtung sicherzustellen. Darüber hinaus sind an den Verstelleinrichtungen 15 schräg nach oben und hinten verlaufenden Schieberaufnahmeeinrichtungen 26 angeordnet, die über Verbindungselemente 14 mit einer Schiebervorrichtung verbunden sind. Die Schiebervorrichtung besteht aus zwei Seitenstreben 13, 13', die verschiebbar in der Schieberaufnahmevorrichtung 26 angeordnet sind. Die Seitenstreben 13, 13' können über die Verbindungselemente 14 festgestellt werden. Am Ende der Seitenstreben 13, 13' ist ein Schieberabschnitt 12 angeordnet, an den ein Benutzer zum Schieben des Kinderwagens 1 greifen kann.

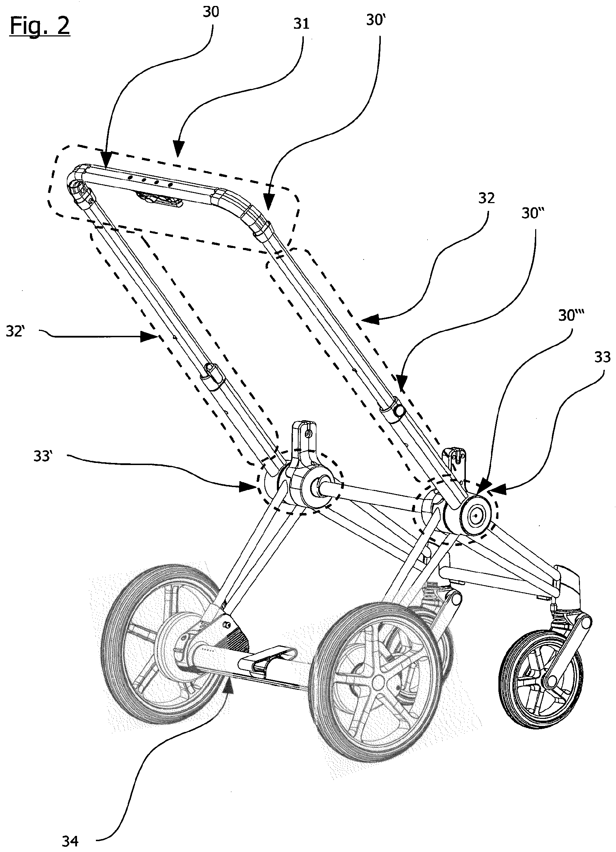

Die Fig. 2 zeigt unterschiedliche Möglichkeiten, Sensoreinheiten 30, 30', 30", 30‴ an dem Kinderwagen 1 anzuordnen. So zeigt die Fig. 2 einen ersten Sensorbereich 31, der in dem gezeigten Ausführungsbeispiel den Schieberabschnitt des Kinderwagens 1 umfasst. In dem ersten Sensorbereich 31 können Kraftsensoren 30, 30' angeordnet sein. Bei dem Kraftsensor 30 kann es sich um einen Sensor handeln, der dazu ausgebildet ist, eine Kraft zu messen. Der Kraftsensor 30 gibt also ein Signal ab, das in einen Kraft umrechenbar ist.

Der Kraftsensor 30 ist in dem gezeigten Ausführungsbeispiel derart in dem Schieberabschnitt des Kinderwagens 1 im ersten Sensorbereich 31 angeordnet, dass eine Interaktion mit einem Verwender des Kinderwagens 1 detektiert werden kann. Dabei ist in einem Ausführungsbeispiel der Kraftsensor 30 in den Schieberabschnitt 12 eingelassen, wobei eine Kontaktfläche des Kraftsensors 30 in Richtung des Bedieners des Kinderwagens 1 zeigend ausgerichtet ist.

Neben einer Befestigung einer Sensoreinheit 30 im Schieberabschnitt ist es auch möglich, in einem weiteren Ausführungsbeispiel Kraftsensoren 30' in einem Verbindungsbereich des Schieberabschnitts 12 mit Seitenstreben 13, 13' des Kinderwagens 1 anzuordnen. Der Schieberabschnitt 12 kann dabei verschiebbar in den Seitenstreben 13, 13' angeordnet und über ein Befestigungselement bzw. Verbindungselement 14' fixiert sein. Zur Messung von durch einen Verwender aufgebrachter Kräfte auf den Schieberabschnitt 12 kann eine Sensoreinheit, z.B. ein Kraftsensor 30' in dem Verbindungselement 14' angeordnet sein. Ein Kraftsensor 30, 30' kann auch länglich ausgebildet sein und dadurch sowohl einen Bereich des Schieberabschnitts 12 als auch des Verbindungsbereichs abdecken.

Die Fig. 2 zeigt ebenfalls überlagert ein zweites Ausführungsbeispiel, bei dem eine Sensoreinheit 30" in einem Verbindungselement der Seitenstreben 13, 13' angeordnet ist.

In einem weiteren Ausführungsbeispiel ist eine Sensoreinheit 30‴ in einem dritten Sensorbereich 33 bzw. 33' an der Verstelleinrichtung 15 angeordnet. Vorzugsweise handelt es sich dabei um einen Drehmomentsensor 30"'. Der Drehmomentsensor 30‴ ist dazu ausgebildet, ein Drehmoment zu messen, welches eine vom Verwender auf den Schieberabschnitt 12 oder die Seitenstreben 13, 13' ausgeübte Kraft hervorruft.

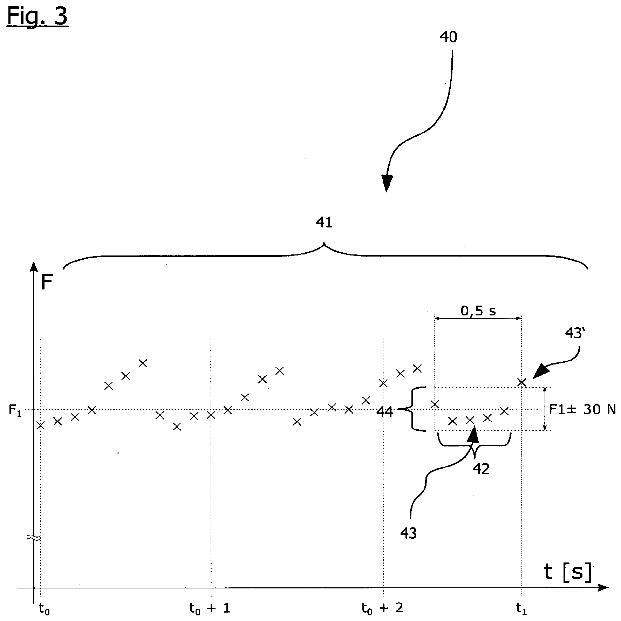

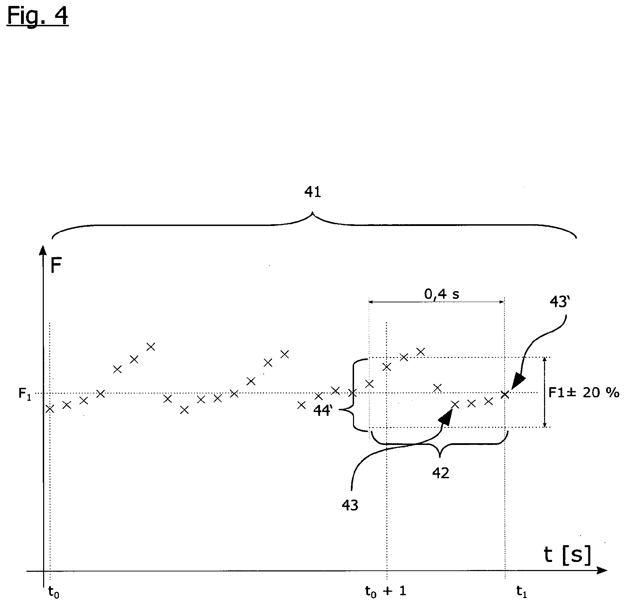

In der Hinterradachse 24 ist eine Recheneinheit 34 angeordnet, die kommunikativ mit den Sensoreinheiten 30, 30', 30", 30‴ verbunden ist. Die Recheneinheit 34 ist dazu ausgebildet, von den Sensoreinheiten 30, 30', 30", 30‴ generierte Sensordaten zu empfangen und zu verarbeiten. Die Verarbeitung der Daten ist in den Fig. 3 und 4 im Detail dargestellt.

Die Fig. 3 zeigt einen Signalverlauf eines Kraftsensors 30, 30', 30", der durch ein Kraftverlaufsdiagramm 40 über einen Zeitraum dargestellt ist. Auf der X-Achse ist die Zeit T[s] und auf der Y-Achse die Kraft F eingezeichnet. In dem Kraftverlaufsdiagramm 40 sind eine Vielzahl von Messwerten 43 eingezeichnet, die von einer Sensoreinheit 30, 30', 30" detektiert sind. Die Messwerte 43 bilden zusammen Sensordaten 41.

Auf der X-Achse sind die Zeitpunkte t₀, t₀+1, t₀+2 und t₁ eingezeichnet. Um festzustellen, ob eine Person ihre Hand an dem Kinderwagen 1 hat, ist die Recheneinheit 34 dazu ausgebildet, einen zeitlich zusammenhängenden Bereich von Messwerten 42 zu betrachten. In der Fig. 3 ist exemplarisch für einen Zeitraum von 0,5 Sekunden eine Teilmenge von Sensordaten 42 eingezeichnet.

Um zu bestimmen, ob ein aktueller Messwert 43' zum Zeitpunkt t₁ eine Interaktion eines Verwenders mit dem Kinderwagen 1 angibt, wird für die sich in einem Zeitintervall vor dem Messwert 43' befindlichen Messwerte 42 ein Referenzwert F1 berechnet, der einen Mittelwert der Sensorwerte in dem Zeitintervall angibt. Darüber hinaus wird um den Referenzwert F1 ein Toleranzintervall 44 gelegt. Das Toleranzintervall 44 ist in dem Ausführungsbeispiel der Fig. 3 als ± 30 Newton bezüglich des Referenzwerts F1 festgelegt.

Beim Verarbeiten des Messwertes 43' wird nun geprüft, ob sich dieser innerhalb des Toleranzintervalls 44 befindet. Wie in der Fig. 3 dargestellt, befindet sich der aktuelle Messwert 43' außerhalb des Toleranzintervalls 44. Das bedeutet, dass die Kraft gegenüber den vorherigen Werten stark zugenommen hat. Daraus kann geschlossen werden, dass hier eine Interaktion von einem Verwender mit dem Kinderwagen 1 besteht. Somit gibt der Messwert 43' an, dass der Kinderwagen 1 durch einen Menschen geschoben wird bzw. von diesem festgehalten wird.

Die im Zusammenhang mit den Fig. 1 und 2 beschriebene Recheneinheit 34 ist dazu ausgebildet, in Reaktion auf das Feststellen, dass der Messwert 43' außerhalb des Toleranzintervalls 44 liegt, einen Motor 21 in einen Antriebszustand zu schalten. Das bedeutet, dass der Motor ein Kinderwagengestell bzw. einen Kinderwagen 1 antreibt.

In anderen Ausführungen, die mehrere Messwerte (beispielsweise 2 oder 3 oder 5 Messwerte) einer Teilmenge außerhalb des Toleranzintervalls verlangen, könnten die gleichen Daten zu einem Schalten des Motors in einen Nichtantriebszustand führen. Im Wesentlichen gilt jedoch: Stellt man sich eine zu den Messwerten gehörende Kurve des Kraftverlaufs vor, so erkennt man, dass beispielsweise bei einer Verdreifachung der Abtastfrequenz auch mehr als ein Messwert, vermutlich ca. 3 Messwerte außerhalb des Toleranzintervalls liegen werden. Dann ergibt es Sinn, entweder den Toleranzbereich auszudehnen oder die erste vorbestimmte Anzahl auf einen Wert größer 1 zu setzen.

In einem weiteren Ausführungsbeispiel wird durch die Recheneinheit 34 geprüft, ob die Messwerte 42 streuen. Das bedeutet, dass die Recheneinheit dazu ausgebildet ist, ein statistisches Maß der Streuung zu berechnen. Im Beispiel der Figur 3 kann die Recheneinheit 34 dazu ausgebildet sein, die Varianz der Messwerte 42 zu berechnen. Ist die berechnete Varianz außerhalb eines Toleranzbereichs, so wird der Motor 21 durch die Recheneinheit 34 in den Antriebszustand geschaltet. In dem letztgenannten Beispiel kommt es für das Umschalten daher nicht auf einen einzelnen Messwert an, sondern auf das Verhältnis der Messwerte eines Intervalls zueinander. Dadurch kann eine robustere Erkennung der Nutzerinteraktion durchgeführt werden.

In der Fig. 4 ist ein Beispiel gezeigt, bei dem der Motor 21 in einen Antriebszustand geschaltet wird. So zeigt die Fig. 4 ebenfalls ein Kraftverlaufsdiagramm 41, in dem auf der Y-Achse Kräfte und auf der X-Achse Zeitpunkte eingezeichnet sind. Dabei ist eine Reihe von Messpunkten 43 in dem Kraftverlaufsdiagramm 41 dargestellt. Wie bereits im Zusammenhang mit der Fig. 3 beschrieben, wird für ein festgelegtes Zeitintervall vor einem aktuell gemessenen Messwert 43' ein Referenzwert F1 bestimmt. Im gezeigten Ausführungsbeispiel der Fig. 4 beträgt das Zeitintervall 0,4 Sekunden. Die Abtastfrequenz, mit der die Sensoren die Messwerte 43 aufzeichnen, ist 20 Hz. Um den Referenzwert F1 wird, ähnlich zu der Beschreibung der Fig. 3, ein Toleranzintervall 44' gelegt. Die Grenzen des Toleranzintervalls 44' sind im Ausführungsbeispiel der Fig. 4 derart gewählt, dass sie ± 20 % des Wertes des Referenzwertes F1 entsprechen. Das Toleranzintervall passt sich also dynamisch an den Referenzwert F1 an.

In dem gezeigten Ausführungsbeispiel der Fig. 4 liegt der aktuell gemessene Messwert 43' innerhalb des Toleranzintervalls 44'. Allerdings liegt (mindestens) ein Wert des Zeitintervalls außerhalb des Toleranzintervalls, und damit bestimmt die Recheneinheit 34, dass der Motor in einen Antriebszustand geschaltet werden muss, da eine ausreichend veränderliche Kraft bzw. ein ausreichend veränderliches Drehmoment auf die Sensoreinheit wirkt, so dass es sehr wahrscheinlich ist, dass eine Person mit dem Kinderwagen 1 interagiert.

Analog zu dem vorstehend beschriebenen Beispiel kann auch durch die Recheneinheit 34 berechnet werden, ob die Varianz der Messwerte 42 eines Intervalls innerhalb eines Toleranzintervalls 44' liegt. Die Recheneinheit 34 ist dazu ausgebildet, den Motor in einen Nichtantriebszustand bzw. Bremszustand zu schalten, wenn die Varianz der Messwerte eines Zeitintervalls innerhalb eines Toleranzintervalls 44' liegt.

In einem weiteren nichtgezeigten Ausführungsbeispiel ist es denkbar, dass die Sensoreinheit dazu ausgebildet ist, mit einer Frequenz von 50 Hz eine Kraft oder ein Drehmoment zu detektieren. Nach einer bestimmten Anzahl von Messungen, z.B. nach 5 Messungen(allgemein: nach n Messungen, wobei n zwischen 2 und 100 oder zwischen 2 und dem doppelten Betrag der in Hertz angegebenen Messfrequenz liegen soll; dabei ist im Rahmen dieser Anmeldung vorgesehen, dass jeder einzelne ganzzahlige Wert n zwischen 2 und 100 und jeder ganzzahlige Wert, der zwischen 2 und dem doppelten Betrag der in Hertz angegebenen Messfrequenz liegt, mit offenbart ist), wird die Bestromung des Motors 21 für eine Messung unterbrochen. Nachdem in zumindest 5, bevorzugt 3, Intervallen Messwerte ohne Bestromung des Motors 21 aufgezeichnet worden sind, wird ein Mittelwert (z.B. das arithmetische Mittel) der Werte im unbestromten Zustand gebildet. Wenn nicht mindestens eine erste vorbestimmte Anzahl von Messwerten im unbestromten Zustand außerhalb, insbesondere wenn alle Messwerte im unbestromten Zustand innerhalb eines Toleranzintervalls um den Mittelwert (das arithmetische Mittel), d.h. einen Referenzwert, liegen, dann wird der Motor 21 in einen Nichtantriebszustand bzw. Bremszustand geschaltet.

Liegt mindestens eine erste vorbestimmte Anzahl von Messwerten, insbesondere zumindest ein Wert außerhalb des Toleranzintervalls, z.B. ± 25 Newton, dann wird festgestellt, dass mit hoher Wahrscheinlichkeit ein Verwender mit dem Kinderwagen 1 interagiert und der Motor 21 wird in einen Antriebszustand geschaltet. Zur Berechnung des arithmetischen Mittels werden die Absolutwerte der Messwerte bestimmt und herangezogen.

Analog zum vorstehend beschriebenen Beispiel ist es auch möglich, dass für die Werte im unbestromten Zustand durch die Recheneinheit 34 ein statistisches Maß der Streuung die Varianz berechnet wird. Liegt das statistische Maß der Streuung (die Varianz) innerhalb eines Toleranzintervalls, so wird der Motor 21 in den Nichtantriebszustand geschaltet. Liegt das statistische Maß der Streuung (die Varianz) außerhalb eines Toleranzintervalls, so wird der Motor 21 durch die Recheneinheit 34 in den Antriebszustand geschaltet.

In einem vierten Ausführungsbeispiel, das ebenfalls nicht gezeigt ist, kann ein zweites Toleranzintervall um den Referenzwert herum definiert werden, z.B. ± 15 Newton. Das zweite Toleranzintervall liegt damit innerhalb des ersten Toleranzintervalls. Wenn nicht mindestens eine zweite vorbestimmte Anzahl von Messwerten im unbestromten Zustand außerhalb, insbesondere wenn alle Messwerte im unbestromten Zustand innerhalb des zweiten Toleranzintervalls liegen, dann wird die Bremse aktiv betätigt (zusätzlich zu einer Schaltung des Motors 21 in einen Nichtantriebszustand).

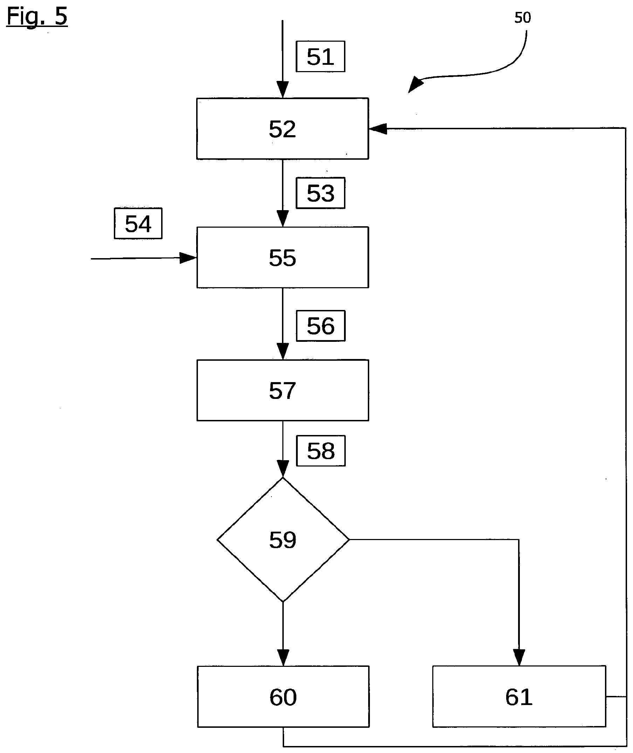

Fig. 5 zeigt ein Ablaufdiagramm 50, welches das Verfahren zur Bestimmung, ob eine bedienende Person mit einem Kinderwagengestell interagiert, illustriert. Zunächst werden in einem Bestimmungsschritt 52 Sensordaten empfange und verarbeitet. Im Bestimmungsschritt wird ein Referenzwert 53 berechnet, der z.B. einen Mittelwert der Sensordaten 51 angeben kann.

Im nachfolgenden Vergleichsschritt 55 wird ein aktueller Messwert 54 empfangen und mit dem Referenzwert verglichen. Im Intervallbestimmungsschritt 57 wird um den Referenzwert ein Toleranzintervall gelegt. Dabei kann der Wert des Referenzwertes berücksichtigt werde. Das bedeutet, dass bei einem großen Referenzwert ein großes Toleranzintervall und bei einem kleinen Referenzwert ein kleines Toleranzintervall bestimmt wird.

Darüber hinaus wird bestimmt, welchen Abstand 58 der aktuelle Messwert 54 zu den Intervallgrenzen hat. Im Prüfschritt 59 wird geprüft, ob der aktuelle Messwert 54 oder zumindest einer der anderen Messwerte des betrachteten Zeitintervalls außerhalb des Toleranzintervalls liegt (allgemein: ob insgesamt mindestens eine erste vorbestimmte Anzahl von Messwerten des betrachteten Zeitintervalls außerhalb des Toleranzintervalls liegen). Wenn der aktuelle Messwert 54 und alle anderen Messwerte des betrachteten Zeitintervalls innerhalb des Toleranzintervalls liegen (allgemein: wenn weniger als eine erste vorbestimmte Anzahl von Messwerten des betrachteten Zeitintervalls außerhalb des Toleranzintervalls liegen), dann wird im Bremsschritt 61 ein Motor des Kinderwagens in einen Nichtantriebszustand geschaltet. In einem Ausführungsbeispiel wird der Motor in einen Bremszustand geschaltet, sodass der Kinderwagen 1 stoppt. Wird festgestellt, dass der aktuelle Messwert 54 oder mindestens einer der anderen Messwerte des betrachteten Zeitintervalls außerhalb des Toleranzintervalls liegt (allgemein: wenn insgesamt mindestens eine erste vorbestimmte Anzahl von Messwerten des betrachteten Zeitintervalls außerhalb des Toleranzintervalls liegen), dann wird ein Motor in einen Antriebszustand geschaltet, sodass der Kinderwagen vollständig oder unterstützend durch den Motor angetrieben werden kann.

Es ist ebenfalls explizit ebenfalls von der Erfindung umfasst, dass die Recheneinheit durch einen kommunikativ mit dem Kinderwagengestellt bzw. Kinderwagen verbundenen Server realisiert ist. So können z.B. nur die Sensordaten über eine Kommunikationseinrichtung an den Server übertragen werden, wobei sämtliche Berechnungsschritte auf dem Server durchgeführt werden und Steuerbefehlen an den Kinderwagen bzw. die Kommunikationseinrichtung zurückgesandt werden.

### Bezugszeichenliste

- 1: Kinderwagen
- 2: Rad
- 3: Radbefestigung
- 10: Kinderwagengestell
- 11: Rahmen
- 12: Schieberabschnitt
- 13, 13': Seitenstreben
- 14, 14': Verbindungselement
- 15: Verstelleinrichtung
- 16: Querstrebe
- 17: Hinterradaufhängung
- 18: Vorderradaufhängung
- 19: Vorderradstrebe
- 20: Feststellbremse
- 21: Motor
- 22: Bremseinrichtung
- 23: Akkumulator
- 24: Hinterradachse
- 25: Haltevorrichtungen
- 26: Schieberaufnahmevorrichtungen
- 31: erster Sensorbereich
- 32, 32': zweiter Sensorbereich
- 33, 33': dritter Sensorbereich
- 34: Recheneinheit
- 30, 30', 30": Kraftsensor
- 30‴: Drehmomentsensor
- 40: Kraftverlaufsdiagramm
- 41: Sensordaten
- 42: Teilmenge der Sensordaten
- 43, 43': Messwert
- 44: Toleranzintervall
- 50: Ablaufdiagramm
- 51: Sensordaten
- 52: Bestimmungsschritt
- 53: Referenzwert
- 54: aktueller Messwert
- 55: Vergleichsschritt
- 56: Abweichung
- 57: Intervallbestimmungsschritt
- 58: Abstand zu Intervallgrenze
- 59: Prüfschritt
- 60: Antriebsschritt
- 61: Bremsschritt
- F1: Mittelwert
- F: Kraftachse
- T[s]: Zeitachse
- t₀: erster Messzeitpunkt
- t₁: aktueller Messzeitpunkt
- S1: Nichtantriebszustand/Bremszustand
- S2: Antriebszustand

## Patentansprüche

1. Kinderwagengestell (10), umfassend:
- eine Sensoreinheit (30, 30', 30", 30‴) zur Erfassung von Sensordaten (41);
- eine Antriebseinheit (21);
**gekennzeichnet durch**
eine Recheneinheit (34), die dazu ausgebildet ist, in Abhängigkeit eines zeitlichen Verlaufs der Sensordaten (41) die Antriebseinheit (21) zwischen einem Antriebszustand und einem Nichtantriebszustand umzuschalten, wobei die Sensordaten (41) eine Vielzahl von Messwerten (43) angeben, denen jeweils ein Aufnahmezeitpunkt (t) zugeordnet ist, wobei eine Anzahl zeitlich aufeinanderfolgender Messwerte (43) eine zeitlich zusammenhängende Teilmenge (42) der Sensordaten (41) bildet,
und wobei die Recheneinheit (34) dazu ausgebildet ist, die Antriebseinheit (21) in den Nichtantriebszustand (S1) zu schalten, wenn weniger als eine vorbestimmte Anzahl von Messwerten (43) der Teilmenge (42) nicht innerhalb eines Toleranzintervalls (44) um einen Referenzwert (F1) liegen, insbesondere wenn alle Messwerte (43) der Teilmenge (42) innerhalb des Toleranzintervalls (44) um den Referenzwert (F1) liegen und/oder die Antriebseinheit (34) in einen Antriebszustand (S2) zu schalten, wenn mindestens die/eine vorbestimmte Anzahl von Messwerten (43) der Teilmenge (42), insbesondere mindestens einer der Messwerte der Teilmenge, außerhalb des Toleranzintervalls liegt, oder
wobei die Recheneinheit (34) dazu ausgebildet ist, die Antriebseinheit (21) in den Nichtantriebszustand (S1) zu schalten, wenn ein statistisches Maß der Streuung der Messwerte (43) innerhalb eines Toleranzintervalls (44) um den Referenzwert (F1) liegt und/oder die Antriebseinheit (34) in einen Antriebszustand (S2) zu schalten, wenn ein statistisches Maß der Streuung der Messwerte (43) außerhalb des Toleranzintervalls (44) liegt.

2. Kinderwagengestell (10) nach Anspruch 1,
**dadurch gekennzeichnet, dass**
die Recheneinheit (34) ferner dazu ausgebildet ist, mindestens einen Referenzwert (F1) für die Sensordaten (41), insbesondere für mindestens eine zeitlich zusammenhängende Teilmenge (42) der Sensordaten (41), zu bestimmen.

3. Kinderwagengestell (10) nach einem der vorhergehenden Ansprüche, insbesondere nach Anspruch 2,
**dadurch gekennzeichnet, dass**
der Referenzwert (F1) einen Mittelwert, insbesondere ein getrimmtes Mittel, ein harmonisches Mittel oder ein gewichtetes harmonisches Mittel angibt.

4. Kinderwagengestell (10) nach einem der vorhergehenden Ansprüche,
**dadurch gekennzeichnet, dass**
ein Messwert (43) eine Kraft und/oder ein Drehmoment angibt.

5. Kinderwagengestell (10) nach einem der vorhergehenden Ansprüche,
**dadurch gekennzeichnet, dass**
eine/die zeitlich zusammenhängende Teilmenge (42) der Sensordaten mindestens ein Intervall umfasst,
wobei jedes Intervall mindestens zwei Messwerte (43) umfasst,
wobei mindestens einer der mindestens zwei Messwerte (43), insbesondere alle Messwerte bis auf einen, in einem bestromten Zustand der Antriebseinheit (21) aufgezeichnet wird, und
wobei mindestens einer der mindestens zwei Messwerte (43), insbesondere genau ein Messwert, in einem nicht bestromten Zustand der Antriebseinheit (21) aufgezeichnet wird,
wobei die Recheneinheit (34) dazu ausgebildet ist, die Antriebseinheit (21) in den Nichtantriebszustand (S1) zu schalten, wenn weniger als eine vorbestimmte Anzahl von Messwerten (43) der Teilmenge (42) nicht innerhalb eines Toleranzintervalls (44) um den Referenzwert (F1) liegen, insbesondere wenn alle im unbestromten Zustand der Antriebseinheit (21) aufgezeichneten Messwerte der Teilmenge (42) innerhalb des Toleranzintervalls (44) um den Referenzwert (F1) liegen und/oder die Antriebseinheit (34) in einen Antriebszustand (S2) zu schalten, wenn die vorbestimmte Anzahl von Messwerten (43) der Teilmenge (42) innerhalb des Toleranzintervalls (44) um den Referenzwert (F1) liegen, insbesondere wenn mindestens einer der im unbestromten Zustand der Antriebseinheit (21) aufgezeichneten Messwerte der Teilmenge (42) außerhalb des Toleranzintervalls (44) liegt.

6. Kinderwagengestell (10) nach einem der vorhergehenden Ansprüche, eine/die zeitlich zusammenhängende Teilmenge (42) der Sensordaten mindestens ein Intervall umfasst,
wobei jedes Intervall mindestens zwei Messwerte (43) umfasst,
wobei mindestens einer der mindestens zwei Messwerte (43), insbesondere alle Messwerte bis auf einen, in einem bestromten Zustand der Antriebseinheit (21) aufgezeichnet wird, und
wobei mindestens einer der mindestens zwei Messwerte (43), insbesondere genau ein Messwert, in einem nicht bestromten Zustand der Antriebseinheit (21) aufgezeichnet wird,
wobei die Recheneinheit (34) dazu ausgebildet ist, die Antriebseinheit (21) in den Nichtantriebszustand (S1) zu schalten, wenn ein statistisches Maß der Streuung der im unbestromten Zustand der Antriebseinheit (21) aufgezeichneten Messwerte der Teilmenge (42) innerhalb eines Toleranzintervalls (44) um den Referenzwert (F1) liegen und/oder die Antriebseinheit (34) in einen Antriebszustand (S2) zu schalten, wenn ein statistisches Maß der Streuung der im unbestromten Zustand der Antriebseinheit (21) aufgezeichneten Messwerte der Teilmenge (42) außerhalb des Toleranzintervalls (44) liegt.

7. Kinderwagengestell (10) nach einem der vorhergehenden Ansprüche, **gekennzeichnet durch**
einen Schieberabschnitt (12), der dazu ausgebildet ist, durch einen Verwender zum Schieben des Kinderwagengestells (10) verwendet zu werden.

8. Kinderwagengestell (10) nach einem der vorhergehenden Ansprüche,
**dadurch gekennzeichnet, dass**
die Sensoreinheit (30, 30', 30", 30‴) an dem Schieberabschnitt (12) derart angeordnet ist, um mit der Hand eines Verwenders zu kontaktieren, wenn dieser eine Hand an dem Schieberabschnitt (12) hat.

9. Kinderwagengestell (10) nach einem der vorhergehenden Ansprüche,
**dadurch gekennzeichnet, dass**
die Antriebseinheit eine Bremseinrichtung (22) und/oder einen Motor, insbesondere einen Elektromotor (21), umfasst.

10. Kinderwagengestell (10) nach einem der vorhergehenden Ansprüche, **gekennzeichnet durch**
mindestens drei Räder (34), wobei die Antriebseinheit derart angeordnet und dazu ausgebildet ist, mindestens eines der Räder (34) anzutreiben und/oder zu blockieren.

11. Kinderwagengestell (10) nach einem der vorhergehenden Ansprüche, **gekennzeichnet durch**
einen Rahmen (11), an dem der Schieberabschnitt (12) und/oder mindestens drei Räder (34) angeordnet sind.

12. Kinderwagengestell (10) nach einem der vorhergehenden Ansprüche,
**dadurch gekennzeichnet, dass**
der Schieberabschnitt (31) mit dem Rahmen (11) über ein Verbindungselement (14) und/oder Verbindungsabschnitt verbindbar ausgebildet ist, wobei die Sensoreinheit (30, 30', 30", 30‴) an dem Verbindungselement (14) oder an dem Verbindungsabschnitt angeordnet ist.

13. Kinderwagengestell (10) nach einem der vorhergehenden Ansprüche,
**dadurch gekennzeichnet, dass**
der Rahmen (11) mindestens einen Gelenkabschnitt (15) umfasst, wobei der Schieberabschnitt (12) um den Gelenkabschnitt (15) herum rotierbar ausgebildet ist.

14. Kinderwagengestell (10) nach einem der vorhergehenden Ansprüche,
**dadurch gekennzeichnet, dass**
die Sensoreinheit (30, 30', 30", 30‴) in dem Gelenkabschnitt (15) angeordnet ist.

15. Kinderwagengestell (10) nach einem der vorhergehenden Ansprüche,
**dadurch gekennzeichnet, dass**
der Rahmen (11) von einer ausgeklappten in eine eingeklappte Konfiguration klappbar ausgebildet ist, insbesondere unter Verwendung des Gelenkabschnittes (15).

16. Kinderwagengestell (10) nach einem der vorhergehenden Ansprüche,
**dadurch gekennzeichnet, dass**
in einer/der ausgeklappten Konfiguration des Rahmens (11), die Sensoreinheit (30, 30', 30", 30‴) kommunikativ und/oder elektrisch mit der Antriebseinheit (21) und/oder der Recheneinheit (34) verbunden ist und/oder in einer/der eingeklappten Konfiguration des Rahmens (11), die Sensoreinheit (30, 30', 30", 30‴) nicht kommunikativ und/oder elektrisch mit der Antriebseinheit (21) und/oder Recheneinheit (34) verbunden ist.

17. Kinderwagen (1) umfassend ein Kinderwagengestell (10) nach einem der vorhergehenden Ansprüche.

18. Computerlesbares-Speichermedium, welches Instruktionen enthält, die mindestens einen Prozessor dazu veranlassen, die folgenden Schritte zu implementieren, wenn die Instruktionen durch einen Prozessor ausgeführt werden:
- Bereitstellen und/oder Empfangen von Sensordaten;
- Bestimmen eines Referenzwertes für die Sensordaten;
- Bereitstellen und/oder Empfangen (mindestens) eines Messwertes;
- Bestimmen eines Steuerbefehls für eine Antriebseinheit eines Kinderwagens nach Anspruch 17 und/oder eines Kinderwagengestells nach einem der Ansprüche 1 bis 16, unter Verwendung der Sensordaten und des Referenzwertes.

19. Verfahren zum Bestimmen eines Steuerbefehls, umfassend die folgenden Schritte:
- Bereitstellen und/oder Empfangen von Sensordaten;
- Bestimmen eines Referenzwertes für die Sensordaten;
- Bereitstellen und/oder Empfangen (mindestens) eines Messwertes;
- Bestimmen eines Steuerbefehls für eine Antriebseinheit eines Kinderwagens, nach Anspruch 17 und/oder eines Kinderwagengestells nach einem der Ansprüche 1 bis 16, unter Verwendung der Sensordaten und des Referenzwertes.

20. Verfahren zum Bestimmen eines Steuerbefehls nach Anspruch 19,
**dadurch gekennzeichnet, dass**
der Steuerbefehl als ein Befehl zur Schaltung in den Nichtantriebszustand und/oder Bremszustand ausgebildet ist, wenn weniger als eine vorbestimmte Anzahl von Messwerten einer Teilmenge nicht innerhalb eines Toleranzintervalls um den Referenzwert (F1) liegen, insbesondere wenn alle Messwerte der Teilmenge und/oder ein statistisches Maß der Streuung der Messwerte einer Teilmenge innerhalb eines Toleranzintervalls um den Referenzwert liegt/liegen.

21. Verfahren zum Bestimmen eines Steuerbefehls nach einem der Ansprüche 19 bis 20,
**dadurch gekennzeichnet, dass**
der Steuerbefehl als ein Antriebsbefehl ausgebildet ist, wenn mindestens eine vorbestimmte Anzahl von Messwerten, insbesondere mindestens ein Messwert einer Teilmenge und/oder ein statistisches Maß der Streuung der Messwerte einer Teilmenge, außerhalb eines Toleranzintervalls um den Referenzwert liegt/liegen.

22. Computerlesbares-Speichermedium, welches Instruktionen enthält, die mindestens einen Prozessor dazu veranlassen, ein Verfahren nach einem der Ansprüche 19-21 zu implementieren, wenn die Instruktionen durch den mindestens einen Prozessor ausgeführt werden.

## Claims

1. Stroller frame (10), comprising:
- a sensory unit (30, 30', 30", 30‴) for capturing sensor data (41);
- a drive unit (21);
**characterized by**
a computing unit (34) designed to switch the drive unit (21) between a drive state and a non-drive state in dependence on a temporal course of the sensor data (41),
wherein the sensor data (41) specify a plurality of measured values (43), to each of which a recording time (t) is assigned, wherein a number of chronologically successive measured values (43) forms a chronologically contiguous subset (42) of the sensor data (41),
and wherein the computing unit (34) is designed to switch the drive unit (21) to the non-drive state (S1) if fewer than a predetermined number of measured values (43) of the subset (42) are not within a tolerance interval (44) around a reference value (F1), in particular if all measured values (43) of the subset (42) are within the tolerance interval (44) around the reference value (F1), and/or to switch the drive unit (34) to a drive state (S2) if at least the/a predetermined number of measured values (43) of the subset (42), in particular at least one of the measured values of the subset, are outside the tolerance interval, or
wherein the computing unit (34) is designed to switch the drive unit (21) to the non-drive state (S1) if a statistical measure of the scattering of the measured values (43) is within a tolerance interval (44) around the reference value (F1), and/or to switch the drive unit (34) to a drive state (S2) if a statistical measure of the scattering of the measured values (43) is outside the tolerance interval (44).

2. Stroller frame (10) as claimed in claim 1,
**characterized in that**
the computing unit (34) is furthermore designed to determine at least one reference value (F1) for the sensor data (41), in particular for at least one chronologically contiguous subset (42) of the sensor data (41).

3. Stroller frame (10) as claimed in any one of the preceding claims,
in particular as claimed in claim 2,
**characterized in that** the reference value (F1) specifies an average value, in particular a trimmed average, a harmonic average, or a weighted harmonic average.

4. Stroller frame (10) as claimed in any one of the preceding claims,
**characterized in that**
a measured value (43) specifies a force and/or a torque.

5. Stroller frame (10) as claimed in any one of the preceding claims,
**characterized in that**
a/the chronologically contiguous subset (42) of the sensor data comprises at least one interval, wherein each interval comprises at least two measured values (43),
wherein at least one of the at least two measured values (43), in particular all measured values but one, is recorded in an energized state of the drive unit (21), and
wherein at least one of the at least two measured values (43), in particular precisely one measured value, is recorded in a deenergized state of the drive unit (21),
wherein the computing unit (34) is designed to switch the drive unit (21) to the non-drive state (S1) if less than a predetermined number of measured values (43) of the subset (42) are not within a tolerance interval (44) around the reference value (F1), in particular if all measured values of the subset (42) recorded in the deenergized state of the drive unit (21) are within the tolerance interval (44) around the reference value (F1) and/or to switch the drive unit (34) to a drive state (S2) if the predetermined number of measured values (43) of the subset (42) are within the tolerance interval (44) around the reference value (F1), in particular if at least one of the measured values of the subset (42) recorded in the deenergized state of the drive unit (21) are outside the tolerance interval (44).

6. Stroller frame (10) as claimed in any one of the preceding claims,
**characterized in that**
a/the chronologically contiguous subset (42) of the sensor data comprises at least one interval, wherein each interval comprises at least two measured values (43),
wherein at least one of the at least two measured values (43), in particular all measured values but one, is recorded in an energized state of the drive unit (21), and
wherein at least one of the at least two measured values (43), in particular precisely one measured value, is recorded in a deenergized state of the drive unit (21),
wherein the computing unit (34) is designed to switch the drive unit (21) to the non-drive state (S1) if a statistical measure of the scattering of the measured values of the subset (42) recorded in the deenergized state of the drive unit (21) is within a tolerance interval (44) around the reference value (F1) and/or to switch the drive unit (34) to a drive state (S2) if a statistical measure of the scattering of the measured values of the subset (42) recorded in the deenergized state of the drive unit (21) is outside the tolerance interval (44).

7. Stroller frame (10) as claimed in any one of the preceding claims,
**characterized by**
a push bar section (12), which is designed to be used by a user to push the stroller frame (10).

8. Stroller frame (10) as claimed in any one of the preceding claims,
**characterized in that**
the sensor unit (30, 30', 30", 30‴) is arranged on the push bar section (12) so as to contact the hand of a user when this user has a hand on the push bar section (12).

9. Stroller frame (10) as claimed in any one of the preceding claims,
**characterized in that**
the drive unit comprises a braking device (22) and/or a motor, in particular an electric motor (21).

10. Stroller frame (10) as claimed in any one of the preceding claims,
**characterized by**
at least three wheels (34), wherein the drive unit is arranged in such a way and is designed to drive and/or block at least one of the wheels (34).

11. Stroller frame (10) as claimed in any one of the preceding claims,
**characterized by**
a frame (11), on which the push bar section (12) and/or at least three wheels (34) are arranged.

12. Stroller frame (10) as claimed in any one of the preceding claims,
**characterized in that**
the push bar section (31) is designed to be connectable to the frame (11) via a connecting element (14) and/or connecting section, wherein the sensor unit (30, 30', 30", 30‴) is arranged on the connecting element (14) or on the connecting section.

13. Stroller frame (10) as claimed in any one of the preceding claims,
**characterized in that**
the frame (11) comprises at least one articulated section (15), wherein the push bar section (12) is designed to be rotatable around the articulated section (15).

14. Stroller frame (10) as claimed in any one of the preceding claims,
**characterized in that**
the sensor unit (30, 30', 30", 30‴) is arranged in the articulated section (15).

15. Stroller frame (10) as claimed in any one of the preceding claims,
**characterized in that**
the frame (11) is designed to be foldable from an unfolded configuration into a folded configuration, in particular using the articulated section (15).

16. Stroller frame (10) as claimed in any one of the preceding claims,
**characterized in that**
in a/the unfolded configuration of the frame (11), the sensor unit (30, 30', 30", 30‴) has a communication and/or electrical connection to the drive unit (21) and/or the computing unit (34) and/or in a/the folded configuration of the frame (11), the sensor unit (30, 30', 30", 30‴) does not have a communication and/or electrical connection to the drive unit (21) and/or computing unit (34).

17. Stroller (1) comprising a stroller frame (10) as claimed in any one of the preceding claims.

18. Computer-readable storage medium containing instructions which cause at least one processor to implement the following steps when the instructions are executed by a processor:
- providing and/or receiving sensor data;
- determining a reference value for the sensor data;
- providing and/or receiving (at least) one measured value;
- determining a control command for a drive unit of a stroller as claimed in claim 17 and/or a stroller frame as claimed in any one of claims 1 to 16, using the sensor data and the reference value.

19. Method for determining a control command, comprising the following steps:
- providing and/or receiving sensor data;
- determining a reference value for the sensor data;
- providing and/or receiving (at least) one measured value;
- determining a control command for a drive unit of a stroller as claimed in claim 17 and/or a stroller frame as claimed in any one of claims 1 to 16, using the sensor data and the reference value.

20. Method for determining a control command as claimed in claim 19,
**characterized in that**
the control command is designed as a command for switching to the non-drive state and/or braking state if less than a predetermined number of measured values of a subset are not within a tolerance interval around the reference value (F1), in particular if all measured values of the subset and/or a statistical measure of the scattering of the measured values of a subset lies/lie within a tolerance interval around the reference value.

21. Method for determining a control command as claimed in any one of claims 19 to 20,
**characterized in that**
the control command is designed as a drive command if at least a predetermined number of measured values, in particular at least one measured value of a subset and/or a statistical measure of the scattering of the measured values of a subset, lies/lie outside a tolerance interval around the reference value.

22. Computer-readable storage medium containing instructions which cause at least one processor to implement a method as claimed in any one of claims 19-21 when the instructions are executed by the at least one processor.

## Revendications

1. Châssis de poussette (10), comprenant :
- une unité de capteur (30, 30', 30", 30"') pour détecter des données de capteur (41) ;
- une unité d'entraînement (21) ;
**caractérisé par**
une unité de calcul (34), qui est réalisée de manière à commuter l'unité d'entraînement (21) entre un état d'entraînement et un état de non-entraînement en fonction d'une évolution dans le temps des données de capteur (41), dans lequel les données de capteur (41) signalent une pluralité de valeurs de mesure (43) auxquelles est associé à chaque fois un temps d'enregistrement (t), dans lequel un nombre de valeurs de mesure (43) qui se suivent dans le temps forme un sous-ensemble (42) de successions dans le temps des données de capteur (41) et dans lequel l'unité de calcul (34) est réalisée de manière à commuter l'unité d'entraînement (21) dans l'état de non-entraînement (S1) lorsque moins d'un nombre prédéterminé de valeurs de mesure (43) du sous-ensemble (42) ne se trouve pas à l'intérieur d'un intervalle de tolérance (44) autour d'une valeur de référence (F1), en particulier lorsque toutes les valeurs de mesure (43) du sous-ensemble (42) se trouvent à l'intérieur de l'intervalle de tolérance (44) autour de la valeur de référence (F1) et/ou à commuter l'unité d'entraînement (34) dans un état d'entraînement (S2) lorsqu'au moins le/un nombre prédéterminé de valeurs de mesure (43) du sous-ensemble (42), en particulier au moins une des valeurs de mesure du sous-ensemble, se trouve à l'extérieur de l'intervalle de tolérance, ou
dans lequel l'unité de calcul (34) est réalisée de manière à commuter l'unité d'entraînement (21) dans l'état de non-entraînement (S1) lorsqu'une mesure statistique de la dispersion des valeurs de mesure (43) se trouve à l'intérieur d'un intervalle de tolérance (44) autour de la valeur de référence (F1) et/ou à commuter l'unité d'entraînement (34) dans un état d'entraînement (S2) lorsqu'une mesure statistique de la dispersion des valeurs de mesure (43) se trouve à l'extérieur de l'intervalle de tolérance (44).

2. Châssis de poussette (10) selon la revendication 1,
**caractérisé en ce que**
l'unité de calcul (34) est en outre réalisée de manière à déterminer au moins une valeur de référence (F1) pour les données de capteur (41), en particulier pour au moins un sous-ensemble (42) de successions dans le temps des données de capteur (41).

3. Châssis de poussette (10) selon l'une des revendications précédentes, en particulier selon la revendication 2,
**caractérisé en ce que**
la valeur de référence (F1) signale une valeur moyenne, en particulier une moyenne tronquée, une moyenne harmonique ou une moyenne harmonique pondérée.

4. Châssis de poussette (10) selon l'une des revendications précédentes,
**caractérisé en ce qu'**
une valeur de mesure (43) signale une force et/ou un couple.

5. Châssis de poussette (10) selon l'une des revendications précédentes,
**caractérisé en ce qu'**
un/le sous-ensemble (42) de successions dans le temps des données de capteur comprend au moins un intervalle,
dans lequel chaque intervalle comprend au moins deux valeurs de mesure (43),
dans lequel au moins une des au moins deux valeurs de mesure (43), en particulier toutes les valeurs de mesure sauf une, est enregistrée dans un état alimenté électriquement de l'unité d'entraînement (21) et
dans lequel au moins une des au moins deux valeurs de mesure (43), en particulier précisément une valeur de mesure, est enregistrée dans un état non alimenté électriquement de l'unité d'entraînement (21),
dans lequel l'unité de calcul (34) est réalisée de manière à commuter l'unité d'entraînement (21) dans l'état de non-entraînement (S1) lorsque moins d'un nombre prédéterminé de valeurs de mesure (43) du sous-ensemble (42) ne se trouve pas à l'intérieur d'un intervalle de tolérance (44) autour de la valeur de référence (F1), en particulier lorsque toutes les valeurs de mesure du sous-ensemble (42) enregistrées dans l'état non alimenté électriquement de l'unité d'entraînement (21) se trouvent à l'intérieur de l'intervalle de tolérance (44) autour de la valeur de référence (F1) et/ou à commuter l'unité d'entraînement (34) dans un état d'entraînement (52) lorsque le nombre prédéterminé de valeurs de mesure (43) du sous-ensemble (42) se trouve à l'intérieur de l'intervalle de tolérance (44) autour de la valeur de référence (F1), en particulier lorsqu'au moins une des valeurs de mesure du sous-ensemble (42) enregistrées dans l'état non alimenté électriquement de l'unité d'entraînement (21) se trouve à l'extérieur de l'intervalle de tolérance (44).

6. Châssis de poussette (10) selon l'une des revendications précédentes,
**caractérisé en ce qu'**
un/le sous-ensemble (42) de successions dans le temps des données de capteur comprend au moins un intervalle,
dans lequel chaque intervalle comprend au moins deux valeurs de mesure (43),
dans lequel au moins une des au moins deux valeurs de mesure (43), en particulier toutes les valeurs de mesure sauf une, est enregistrée dans un état alimenté électriquement de l'unité d'entraînement (21) et
dans lequel au moins une des au moins deux valeurs de mesure (43), en particulier précisément une valeur de mesure, est enregistrée dans un état non alimenté électriquement de l'unité d'entraînement (21),
dans lequel l'unité de calcul (34) est réalisée de manière à commuter l'unité d'entraînement (21) dans l'état de non-entraînement (S1) lorsqu'une mesure statistique de la dispersion des valeurs de mesure du sous-ensemble (42) enregistrée dans l'état non alimenté électriquement de l'unité d'entraînement (21) se trouve à l'intérieur d'un intervalle de tolérance (44) autour de la valeur de référence (F1) et/ou à commuter l'unité d'entraînement (34) dans un état d'entraînement (S2) lorsqu'une mesure statistique de la dispersion des valeurs de mesure du sous-ensemble (42) enregistrée dans l'état non alimenté électriquement de l'unité d'entraînement (21) se trouve à l'extérieur de l'intervalle de tolérance (44).

7. Châssis de poussette (10) selon l'une des revendications précédentes,
**caractérisé par**
une section d'élément de poussée (12), qui est réalisée de manière à être utilisée par un utilisateur pour pousser le châssis de poussette (10).

8. Châssis de poussette (10) selon l'une des revendications précédentes,
**caractérisé en ce que**
l'unité de capteur (30, 30', 30", 30"') est disposée sur la section d'élément de poussée (12) de manière à être en contact avec la main d'un utilisateur lorsque celui-ci a une main sur la section d'élément de poussée (12).

9. Châssis de poussette (10) selon l'une des revendications précédentes,
**caractérisé en ce que**
l'unité d'entraînement comprend un moyen de freinage (22) et/ou un moteur, en particulier un moteur électrique (21).

10. Châssis de poussette (10) selon l'une des revendications précédentes,
**caractérisé par**
au moins trois roues (34), dans lequel l'unité d'entraînement est disposée et réalisée de manière à entraîner et/ou bloquer au moins une des roues (34).

11. Châssis de poussette (10) selon l'une des revendications précédentes,
**caractérisé par**
un cadre (11) sur lequel sont disposées la section d'élément de poussée (12) et/ou au moins trois roues (34).

12. Châssis de poussette (10) selon l'une des revendications précédentes,
**caractérisé en ce que**
la section d'élément de poussée (31) est réalisée de manière à pouvoir être reliée au cadre (11) par le biais d'un élément de liaison (14) et/ou une section de liaison dans lequel l'unité de capteur (30, 30', 30", 30"') est disposée sur l'élément de liaison (14) ou sur la section de liaison.

13. Châssis de poussette (10) selon l'une des revendications précédentes,
**caractérisé en ce que**
le cadre (11) comprend au moins une section d'articulation (15), dans lequel la section d'élément de poussée (12) est réalisée de manière à pouvoir tourner autour de la section d'articulation (15).

14. Châssis de poussette (10) selon l'une des revendications précédentes,
**caractérisé en ce que**
l'unité de capteur (30, 30', 30", 30"') est disposée dans la section d'articulation (15).

15. Châssis de poussette (10) selon l'une des revendications précédentes,
**caractérisé en ce que**
le cadre (11) est réalisé de manière à pouvoir être plié depuis une configuration dépliée dans une configuration repliée, en particulier en utilisant la section d'articulation (15).

16. Châssis de poussette (10) selon l'une des revendications précédentes,
**caractérisé en ce que**
dans une/la configuration dépliée du cadre (11), l'unité de capteur (30, 30', 30", 30"') est reliée en communication et/ou électriquement avec l'unité d'entraînement (21) et/ou l'unité de calcul (34) et/ou dans une/la configuration repliée du cadre (11), l'unité de capteur (30, 30', 30", 30"') n'est pas reliée en communication et/ou électriquement avec l'unité d'entraînement (21) et/ou l'unité de calcul (34).

17. Poussette (1) comprenant un châssis de poussette (10) selon l'une des revendications précédentes.

18. Support de mémoire lisible par ordinateur qui contient des instructions qui amènent au moins un processeur à mettre en œuvre les étapes suivantes lorsque les instructions sont exécutées par un processeur :
- fournir et/ou recevoir des données de capteur ;
- déterminer une valeur de référence pour les données de capteur ;
- fournir et/ou recevoir (au moins) une valeur de mesure ;
- déterminer un ordre de commande pour une unité d'entraînement d'une poussette selon la revendication 17 et/ou d'un châssis de poussette selon l'une des revendications 1 à 16, en utilisant les données de capteur et la valeur de référence.

19. Procédé destiné à déterminer un ordre de commande, comprenant les étapes suivantes :
- fournir et/ou recevoir des données de capteur ;
- déterminer une valeur de référence pour les données de capteur ;
- fournir et/ou recevoir (au moins) une valeur de mesure ;
- déterminer un ordre de commande pour une unité d'entraînement d'une poussette selon la revendication 17 et/ou d'un châssis de poussette selon l'une des revendications 1 à 16, en utilisant les données de capteur et la valeur de référence.

20. Procédé de détermination d'un ordre de commande selon la revendication 19,
**caractérisé en ce que**
l'ordre de commande est réalisé sous la forme d'un ordre pour commuter dans l'état de non-entraînement et/ou l'état de freinage lorsque moins d'un nombre prédéterminé de valeurs de mesure d'un sous-ensemble ne se trouve pas à l'intérieur d'un intervalle de tolérance autour de la valeur de référence (F1), en particulier lorsque toutes les valeurs de mesure du sous-ensemble et/ou une mesure statistique de la dispersion des valeurs de mesure d'un sous-ensemble se trouve(nt) à l'intérieur d'un intervalle de tolérance autour de la valeur de référence.

21. Procédé de détermination d'un ordre de commande selon l'une des revendications 19 à 20, **caractérisé en ce que**
l'ordre de commande est réalisé sous la forme d'un ordre d'entraînement lorsqu'au moins un nombre prédéterminé de valeurs de mesure, en particulier au moins une valeur de mesure d'un sous-ensemble et/ou une mesure statistique de la dispersion des valeurs de mesure d'un sous-ensemble, se trouve(nt) à l'extérieur d'un intervalle de tolérance autour de la valeur de référence.

22. Support de mémoire lisible par ordinateur qui contient des instructions qui amènent au moins un processeur à mettre en œuvre un procédé selon l'une des revendications 19 à 21 lorsque les instructions sont exécutées par l'au moins un processeur.
